# EUROPEAN PATENT SPECIFICATION

(11) **EP 4 210 415 B1**
(45) Date of publication and mention of the grant of the patent: **28.05.2025**
(21) Application number: 20951877.8
(22) Date of filing: 01.09.2020
(51) Int. Cl.: H04W 74/00, H04W 24/10, H04W 74/0808, H04W 74/0833

(54) **METHOD FOR REPORTING RANDOM ACCESS SITUATION, AND TERMINAL DEVICE AND NETWORK DEVICE**
VERFAHREN ZUR MELDUNG EINER DIREKTZUGRIFFSSITUATION SOWIE ENDGERÄTEVORRICHTUNG UND NETZWERKVORRICHTUNG
PROCÉDÉ DE SIGNALEMENT DE SITUATION D'ACCÈS ALÉATOIRE, DISPOSITIF TERMINAL ET DISPOSITIF DE RÉSEAU

(43) Date of publication of application: 12.07.2023
(73) Proprietor: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN)
(74) Representative: Novagraaf Technologies
(86) International application number: PCT/CN2020/112893
(87) International publication number: WO 2022/047629

(56) References cited:
- WO-A1-2020/060466
- WO-A1-2021/159544
- WO-A1-2021/167519
- CN-A- 107 371 168
- CN-A- 108 476 532
- CN-A- 111 385 816
- US-A1- 2020 221 309
- US-A1- 2020 221 495
- CMCC: "Considerations on BWP switching and multi-activation for NR-U", vol. RAN WG2, no. Spokane, USA; 20181112 - 20181116, 12 November 2018 (2018-11-12), XP051557634, Retrieved from the Internet <URL:http://www.3gpp.org/ftp/Meetings%5F3GPP%5FSYNC/RAN2/Docs/R2%2D1818129%2Ezip> [retrieved on 20181112]
- VIVO: "Remaining issues on uplink LBT failure", 3GPP DRAFT; R2-1914367, vol. RAN WG2, 8 November 2019 (2019-11-08), Reno, USA, pages 1 - 5, XP051816451
- VIVO: "Remaining Issues of UL LBT failure", 3GPP DRAFT; R2-2000148, vol. RAN WG2, 14 February 2020 (2020-02-14), pages 1 - 4, XP051848832

## Description

### TECHNICAL FIELD

The present application relates to the field of communication technology, and more particularly, to a method for reporting a situation of a random access, a method for receiving and applying a situation of a random access, a terminal device and a network device.

### BACKGROUND

Unlicensed Spectrum is an important technology in the 5G New Radio (NR) Access system. In general, the center frequency point of the working frequency band of NR-based access to unlicensed spectrum (NR-U) may be 5GHz and 6GHz. In unlicensed spectrum, NR-U should be designed to ensure fairness with other systems already operating on such unlicensed spectrum. The principle of fairness is the impact of NR-U on systems already deployed on unlicensed spectrum (e.g., WiFi) may not exceed the impact between these systems. To ensure fair coexistence among systems on unlicensed spectrum, energy detection has been agreed as a basic coexistence mechanism. The general energy detection mechanism is the Listen Before Talk (LBT) mechanism, and the basic principle of this mechanism is that the base station or terminal (transmitter) needs to monitor for a specified period of time before transmitting data on the unlicensed spectrum. If the monitoring result indicates that the channel is idle, the transmitter may transmit data to the receiver. If the monitoring result indicates that the channel is in an occupied state, the transmitter needs to fall back for a period of time according to the regulations and continues to monitor the channel, and the transmitter transmits data to the receiver until the channel monitoring result is idle state.

In the random access procedure of the NR-U system, for a four-step random access procedure, the terminal and the base station need to send a total of four messages to complete the random access procedure. For a two-step random access procedure, the terminal and the base station need to send a total of two messages to complete the random access procedure. Among them, message A (MsgA) includes a random access preamble sent on a physical random access channel (PRACH) and payload information sent on a physical uplink shared channel (PUSCH). Whether it is the four-step random access or the two-step random access, before sending a message each time, the terminal and the base station need to perform LBT detection to determine whether the channel is occupied; if the LBT detection result is negative, it will cause the terminal to fail to complete random access and the terminal needs to resend Msg1/MsgA. In the existing random access technology, because the terminal device does not report to the network device whether LBT failure is detected, the network device cannot adjust the resource configuration of random access accordingly. US 2020/221309 A1 (OZTURK OZCAN [US] ET AL) 9 July 2020, discloses a method, a computer-readable medium, and an apparatus. The apparatus may be configured to determine to send a transmission to a first base station on a first unlicensed frequency channel of an unlicensed frequency spectrum. The apparatus may be configured to determine, for one or more attempts of a listen before talk (LBT) protocol, whether each attempt is a failed attempt or a successful attempt. The apparatus may be configured to determine that the first unlicensed frequency channel is one of: unavailable based on the LBT protocol failing due to at least one of a number of failed attempts exceeding a first threshold number of failed attempts or a duration of failed attempts exceeding a first threshold duration, or available based on at least one attempt of the LBT protocol being successful for the transmission. The apparatus may be configured to send a report to the first base station indicating whether the first unlicensed frequency channel is unavailable or available through a unicast radio resource control (RRC) message or a medium access control (MAC) control element (CE).

### SUMMARY

The invention is set out in the appended set of claims. The present application provides a method for reporting a situation of random access, a method for receiving and applying a situation of a random access, a terminal device and a network device, which can realize reporting to the network the situation of the random access that has been performed by the terminal before.

### BRIEF DESCRIPTION OF THE DRAWINGS

FIG. 1 is a schematic diagram of an application scenario of the embodiments of the present application.
FIG. 2 is a flow chart of implementing a method 200 for reporting a situation of a random access according to the embodiments of the present application.
FIG. 3 is a schematic diagram of a four-step random access procedure.
FIG. 4 is a schematic diagram of a manner in which a network device adjusts a frequency domain position of a random access resource in a method 200 for reporting a situation of the random access according to the embodiments of the present application.
FIG. 5 is a schematic diagram of a two-step random access procedure.
FIG. 6 is a flow chart of implementing a method 600 for receiving and applying a situation of a random access according to the embodiments of the present application.
FIG. 7 is a schematic structural diagram of a terminal device 700 according to the embodiments of the present application.
FIG. 8 is a schematic structural diagram of a network device 800 according to the embodiments of the present application.
FIG. 9 is a schematic structural diagram of a network device 900 according to the embodiments of the present application.
FIG. 10 is a schematic structural diagram of a communication device 1000 according to the embodiments of the present application.
FIG. 11 is a schematic structural diagram of a chip 1100 according to the embodiments of the present application.

### DETAILED DESCRIPTION

The technical solutions in the embodiments of the present application will be described below with reference to the drawings in the embodiments of the present application.

It should be noted that the terms "first" and "second" and the like in the description of the embodiments of the present application, claims and the above drawings are used to distinguish similar objects, and not necessarily used to describe a specific order or sequence order. The objects described by "first" and "second" described at the same time may be the same or different.

The technical solutions of the embodiments of the present application may be applied to various communication systems, for example: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system, New Radio (NR) system, evolution system of NR system, LTE-based access to unlicensed spectrum (LTE-U) system, NR-based access to unlicensed spectrum (NR-U) system, Universal Mobile Telecommunication System (UMTS), Wireless Local Area Networks (WLAN), Wireless Fidelity (WiFi), next-generation (5th-Generation, 5G) communications or other communication systems, etc.

Generally speaking, the number of connections supported by conventional communication systems is limited and easy to implement. However, with the development of communication technology, mobile communication systems will not only support conventional communication, but also support, for example, Device to Device (D2D) communication, Machine to Machine (M2M) communication, Machine Type Communication (MTC), and Vehicle to Vehicle (V2V) communication, etc. The embodiments of the present application may also be applied to these communication systems.

Optionally, the communication system in the embodiments of the present application may be applied to a Carrier Aggregation (CA) scenario, a Dual Connectivity (DC) scenario, and may also be applied to a Standalone (SA) network deployment scenario.

The embodiments of the present application do not limit the applied frequency spectrum. For example, the embodiments of the present application may be applied to the licensed spectrum, and may also be applied to the unlicensed spectrum.

Embodiments of the present application describe various embodiments in conjunction with a network device and a terminal device, where the terminal device may also be referred to as a user equipment (UE), an access terminal, a user unit, a user station, a mobile station, a mobile, a remote station, a remote terminal, a mobile device, a user terminal, a terminal, a wireless communication device, a user agent, or a user apparatus, etc. The terminal device may be a station (ST) in the WLAN, and may be a cellular phone, a cordless phone, a Session Initiation Protocol (SIP) phone, a Wireless Local Loop (WLL) station, a Personal Digital Assistant (PDA), a handheld device with wireless communication function, a computing device or other processing devices connected to a wireless modem, an in-vehicle device, a wearable device, a terminal device in next generation communication systems, such as a terminal device in NR networks or a terminal device in future evolved Public Land Mobile Network (PLMN), etc.

As an example but not a limitation, in the embodiments of the present application, the terminal device may also be a wearable device. The wearable device may also be referred to as a wearable smart device, which is a general term for wearable devices which are intelligently designed and developed for daily wear applying wearable technology, such as glasses, gloves, watches, clothing and shoes. The wearable device is a portable device that is worn directly on the body, or integrated into the user's clothing or accessories. The wearable device is not only a hardware device, but also achieves powerful functions through software support, data interaction, and cloud interaction. Generalized wearable smart devices include full-featured and large-sized devices that can achieve complete or partial functions without relying on smartphones, such as smart watches or smart glasses, and devices that need to be used in conjunction with other devices (e.g., smartphones) and focus only on a certain type of application function, such as various types of smart bracelets and smart jewelry for physical sign monitoring.

The network device may be a device used to communicate with mobile devices, and the network device may be an Access Point (AP) in WLAN, a base station (Base Transceiver Station, BTS) in GSM or CDMA, or a base station (NodeB, NB) in WCDMA, and may be an evolved base station (Evolutional Node B, eNB or eNodeB) in LTE, or a relay station or an access point, or a vehicle-mounted device, a wearable device, and may be a network device (gNB) in the NR network or a network device in the future evolved PLMN network, etc.

In the embodiments of the present application, the network device provides services for the cell, and the terminal device communicates with the network device through the transmission resources (for example, frequency domain resources, or spectrum resources) used by the cell. The cell may be a cell corresponding to the network device (such as a base station), and the cell may belong to a macro base station or a base station corresponding to a small cell, where the small cell may include: a Metro cell, a Micro cell, a Pico cell, a Femto cell, etc. These small cells have the characteristics of small coverage and low transmission power, and are suitable for providing high-speed data transmission services.

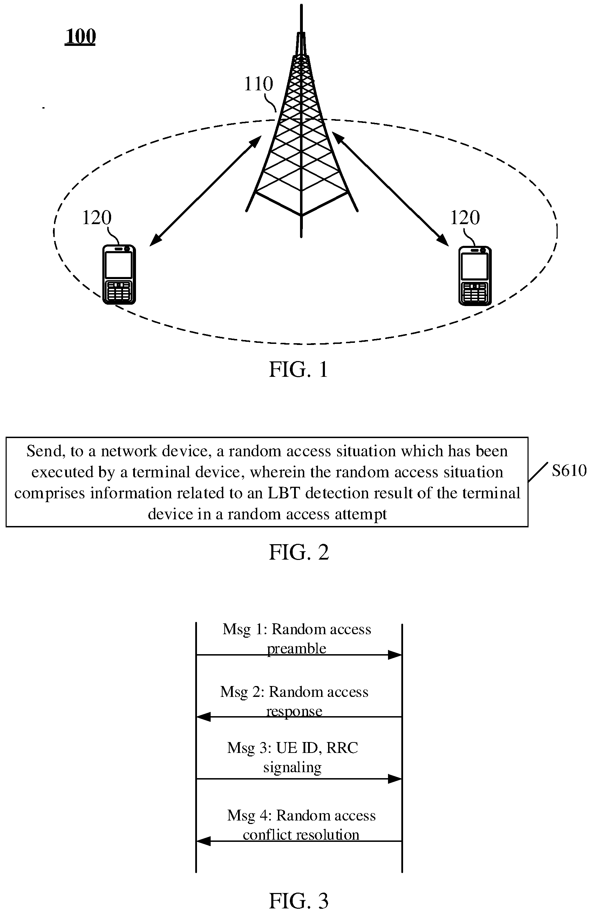

FIG. 1 exemplarily illustrates one network device 110 and two terminal devices 120. Optionally, the wireless communication system 100 may include a plurality of network devices 110, and other numbers of terminal devices 120 may be included within the coverage area of each network device 110, which is not limited in the embodiments of the present application. The embodiments of the present application may be applied to one terminal device 120 and one network device 110, and may also be applied to one terminal device 120 and another terminal device 120.

Optionally, the wireless communication system 100 may also include other network entities such as a Mobility Management Entity (MME), an Access and Mobility Management Function (AMF), which is not limited by the embodiments of the present application.

It should be understood that the terms "system" and "network" are often used interchangeably herein. The term "and/or" in this disclosure is just an association relationship describing associated objects, which means that there can be three relationships. For example, A and/or B may indicate that A exists alone, A and B exist simultaneously, and B exists alone. In addition, the character "/" in this disclosure generally indicates that the contextual objects are in an "or" relationship.

The embodiments of the present application provide a method for reporting a situation of a random access, and FIG. 2 is a flow chart of implementing a method 200 for reporting the situation of the random access according to the embodiments of the present application. The method may optionally be applied to the system shown in FIG. 1, but is not limited thereto. The method includes at least some of the following contents.

In S210: a situation of a random access that has been performed by the terminal device is sent to a network device, where the situation of the random access includes information related to a result of a listen before talk (LBT) detection of the terminal device in a random access attempt.

Optionally, the terminal device sends the situation of the random access in a random access report.

The random access report (RACH report) is a message sent by the terminal device to the network device proposed by the 5G NR R16 Self-Organizing Network (SON) technology. In response to the request of the network device, the terminal device sends the random access report to the network device, and the network device may optimize the parameters set by the network itself according to the report reported by the terminal device. In the embodiments of the present application, the terminal device may carry the situation of the random access that needs to be reported in the random access report, and report it to the network device.

For the four-step random access procedure and the two-step random access procedure, the manners for the terminal device to report the situation of the random access are different, which are described respectively below.

For the first category, reporting the situation of the random access (such as LBT detection results) in the four-step random access procedure:

The four-step random access procedure is shown in FIG. 3, including: the terminal device sending Msg1 to the network device, where a random access preamble is carried in the Msg 1; the network device replying a random access response, i.e., Msg2, to the terminal device, where the Msg2 contains an uplink grant (UL grant) for a sending opportunity of Msg3; and the terminal device sending an RRC signaling carrying UE ID, i.e., Msg3, to the network device, where the Msg 3 is sent in the UL grant allocated by the network device. After the terminal device sends the Msg3, the contention resolution timer is started, and the random access process is completed if the terminal receives a Msg4 from the network device before the timer expires.

In the embodiments of the present application, for the four-step random access procedure, the terminal device reports to the network device whether an LBT failure is detected during the sending procedure of Msg1 and/or Msg3. The network device adjusts the resource configuration according to the detection result reported by the terminal device. The specific scheme is as follows:

### 1. On the terminal side:

The terminal device sends at least one of the following to the network device:
indication information indicating whether an LBT failure is detected before a message 1 of a random access procedure (Msg1) is sent; and
indication information indicating whether an LBT failure is detected before a message 3 of the random access procedure (Msg3) is sent.

Optionally, the terminal device further sends at least one of the following to the network device:
an UL grant of the message 3 of the random access procedure (Msg3); and
a time-frequency location of the message 3 of the random access procedure.

For example, the terminal device reports at least one of the following:
reporting whether the terminal encounters a situation of LBT failure in each random access attempt in the random access report;
optionally, the terminal device may report that Msg1 or Msg3 encountered LBT failure;
optionally, the terminal device may report the UL grant of Msg3 or the time-frequency location of Msg3 to the network.

In addition, the terminal device may also report in the random access report a measurement result of the terminal device related to a channel occupancy of a cell where the random access is located, measResultForRSSI.

Optionally, the measResultForRSSI is included in a random access report.

Optionally, the measResultForRSSI is included in a random access report under each Synchronization Signal Block (SSB).

Optionally, the measResultForRSSI is included in a random access report under each Channel Status Indicator Reference Signal (CSI-RS).

Optionally, the measResultForRSSI is included in a random access report of each attempt.

Taking the measResultForRSSI being included in the random access report under each SSB/CSI-RS as an example, the method for the terminal to report the situation of the LBT detection during the four-step random access procedure is as follows:
measResultForRSSI including the measurement result of Received Signal Strength Indication (RSSI) in dBm and channel occupancy, where the channel occupancy is the percentage of samples whose RSSI is higher than a preset channel occupancy threshold.

If measRSSI-ReportConfig is configured in the corresponding report configuration (reportConfig), the RSSI result (rssi-Result) is set to the average of the samples provided by the lower layer during the report interval, and the channel occupancy is set to the percentage of samples with RSSI values above the preset channel occupancy threshold during the report interval to all samples.

Examples of reporting measResultForRSSI in the random access report (PerRASSBInfo-r16) under each SSB and reporting measResultForRSSI in the random access report (PerRACSI-RSInfo-r16) under each CSI-RS are as follows:

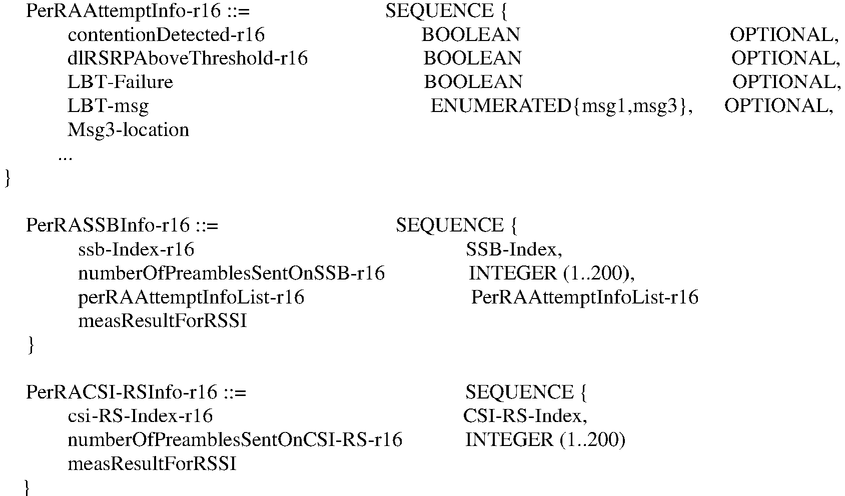

### 2. On the network side:

The network device may receive a situation of a random access that has been performed by a terminal device, where the situation of the random access includes information related to a result of an LBT detection of the terminal device in a random access attempt.

Optionally, the network device may further adjust the random access resource according to the situation of the random access, for example, change a time-frequency location of the random access resource when a plurality pieces of information related to LBT failure are received.

Optionally, the network device determines whether the PerRAAttemptInfoList-r16 in the received random access report of the terminal contains too many PerRAAttemptInfo indicating information related to LBT failure. If the answer is yes, it is considered to change the time-frequency location of the random access resource. For example, the frequency location of a bandwidth part (BWP) where the random access resource is located is changed, specifically, locationAndBandwidth may be changed to avoid a frequency position with a lot of interference. Alternatively, when the BWP is wide enough (greater than 20MHz), a frequency position of the random access resource inside the BWP, msg1-FrequencyStart-r16, is changed. The above manner may be applied to Msg3.

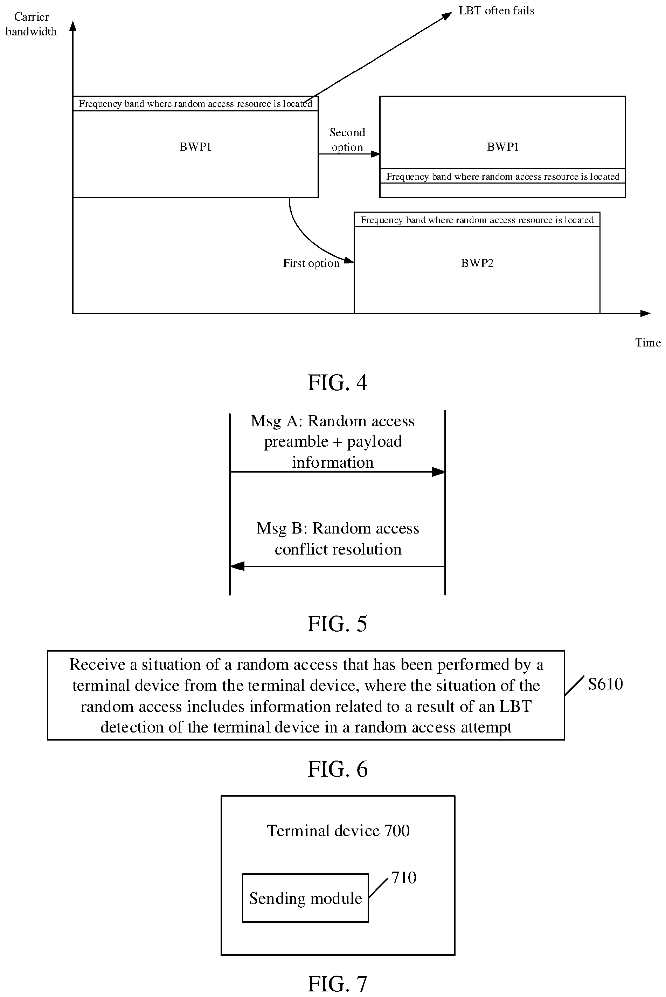

FIG. 4 is a schematic diagram of a manner in which a network device adjusts a frequency domain position of a random access resource in a method for adjusting the random access resource according to the embodiments of the present application. As shown in FIG. 4, when the random access report received by the network device contains a plurality pieces of information related to LBT failure, the time-frequency location of the random access resource may be changed. Two changing manners are shown in FIG. 4. The first option is to change the frequency position of the BWP where the random access is located. For example, if the LBT frequently fails during the random access of the terminal device, the BWP where the random access is located is then changed from BWP1 to BWP2. The second option is to change the frequency position of the random access resource inside the BWP. For example, if the LBT frequently fails during the random access of the terminal device, the frequency band where the random access is located in the BWP1 is changed. The premise of adopting the second option may be that the BWP is wide enough, e.g., the BMP is greater than a preset threshold. For example, the preset threshold is set to 20MHz.

In addition, the manner in which the network device adjusts the random access resource according to the LBT detection result reported by the terminal device may also include: changing a frequency domain position of an uplink grant (UL grant) allocated to a Msg3 in a Random Access Response (RAR) when receiving a plurality pieces of information related to LBT failure of the Msg3 of the random access procedure.

Optionally, the network device may determine whether LBT failure frequently occurs at the sending position of the received Msg3 of the terminal, and if yes, it considers to change the frequency domain location of the uplink grant allocated to Msg3 in the RAR.

For the second category, reporting the situation of the random access (such as LBT detection results) in the two-step random access procedure:

The two-step random access procedure is shown in FIG. 5, where the terminal and the base station need to send a total of two messages to complete the random access procedure. MsgA contains the random access preamble sent on PRACH and payload information sent on PUSCH. The detection situations of LBT during the two-step random access procedure are as follows:
1. LBT fails before the MsgA preamble is sent: the terminal cannot send MsgA (including MsgA preamble and MsgA payload), and cannot initiate the random access procedure.
2. LBT fails before the MsgA payload is sent: the terminal cannot send MsgA payload. If the terminal detects a fallback indication within the MsgB-ResponseWindow, the terminal retransmits the MsgA payload using the UL grant scheduled by the network, that is, it falls back to the transmission of Msg3 in the four-step random access procedure; otherwise, the terminal re-initiates the transmission of MsgA.
3. LBT fails before the MsgB is sent: the base station cannot send MsgB (including MsgB used to indicate fallback or MsgB used to indicate successful contention conflict resolution), the terminal cannot receive the feedback on MsgA from the network in the MsgB-ResponseWindow, and needs to re-initiate the transmission of MsgA.

In the embodiments of the present application, for the two-step random access procedure, the terminal device reports to the network device whether an LBT failure is detected during the sending procedure of MsgA preamble, MsgA payload and/or Msg3. The network device adjusts the resource configuration according to the detection result reported by the terminal device. The specific schemes are as follows:

### 1. On the terminal side:

The terminal device sends at least one of the following to the network device:
indication information indicating whether an LBT failure occurs before a preamble of a message A of a random access procedure is sent;
indication information indicating whether an LBT failure occurs before a payload of the message A of the random access procedure is sent; and
indication information indicating whether an LBT failure occurs before a message 3 of the random access procedure is sent.

Optionally, the terminal device further sends at least one of the following to the network device:
information related to a time-frequency location where the preamble of the message A of the random access procedure is located;
information related to a time-frequency location where the payload of the message A of the random access procedure is located;
information related to a time-frequency location where the message 3 of the random access procedure is located; and
an uplink grant received on the fallback random access response (RAR).

For example, the terminal device reports at least one of the following:
reporting whether the terminal encounters a situation of LBT failure in each random access attempt in the random access report;
optionally, the terminal device may report that MsgA preamble, MsgA payload and/or Msg3 encounters LBT failure;
optionally, the terminal device may report the time-frequency location of the MsgA preamble to the network;
optionally, the terminal device may report the time-frequency location of the MsgA payload to the network;
optionally, the terminal device may report the time-frequency location of Msg3 or the UL GRANT received in the fallback RAR to the network.

In some implementation manners, the information related to the time-frequency location where the MsgA preamble of the random access procedure is located includes at least one of the following:
a lowest frequency position used to transmit message A, msgA-RO-FrequencyStart; and
information about the number of frequency multiplexing, msgA-FDM.

Correspondingly, the network device may determine a spectrum bandwidth occupied by a sending resource of the MsgA preamble based on at least one of the lowest frequency position used to transmit message A msgA-RO-FrequencyStart, the information about the number of frequency multiplexing msgA-FDM, the number of Physical Resource Blocks (PRBs) occupied by each Random Access Channel Occasion (RACH Occasion, RO) unit, and a subcarrier bandwidth of BWP.

For example, msgA-RO-FrequencyStart is 56, msgA-FDM = 2, the number of RBs occupied by each RO unit = 6, and the subcarrier bandwidth of BWP is 30KHZ. Then the network device determines that the RB indexes occupied by the MsgA preamble is from 56 to 56+6*2 = 68, and the bandwidth range is 12*2*30KHz = 720KHz (one PRB=a frequency range occupied by 12 subcarriers). The starting position is given by the starting frequency point of the BWP + msgA-RO-FrequencyStart*12.

In some implementation manners, the information related to the time-frequency location where the MsgA payload of the random access procedure is located includes at least one of the following:
a lowest frequency position where the payload is located, frequencyStartMsgA-PUSCH;
information about the number of frequency domain multiplexing, nrofMsgA-PO-FDM;
the number of PRBs occupied by each Physical Uplink Shared Channel (PUSCH) unit, nrofPRBs-PerMsgA-PO.

Correspondingly, the network device may determine a spectrum bandwidth occupied by a sending resource of the MsgA payload based on at least one of the lowest frequency position where the payload is located frequencyStartMsgA-PUSCH, the information about the number of frequency domain multiplexing nrofMsgA-PO-FDM, the number of PRBs occupied by each PUSCH unit nrofPRBs-PerMsgA-PO, and a subcarrier bandwidth of the BWP.

In addition, the terminal device may also report in the random access report a measurement result of the terminal device related to a channel occupancy of a cell where the random access is located, measResultForRSSI,.

Optionally, the measResultForRSSI is included in a random access report.

Optionally, the measResultForRSSI is included in a random access report under each SSB.

Optionally, the measResultForRSSI is included in a random access report under each CSI-RS.

Optionally, the measResultForRSSI is included in a random access report of each random access attempt.

Taking the measResultForRSSI being included in the random access report under each SSB as an example, the method for the terminal to report the situation of the LBT detection during the two-step random access procedure is as follows:

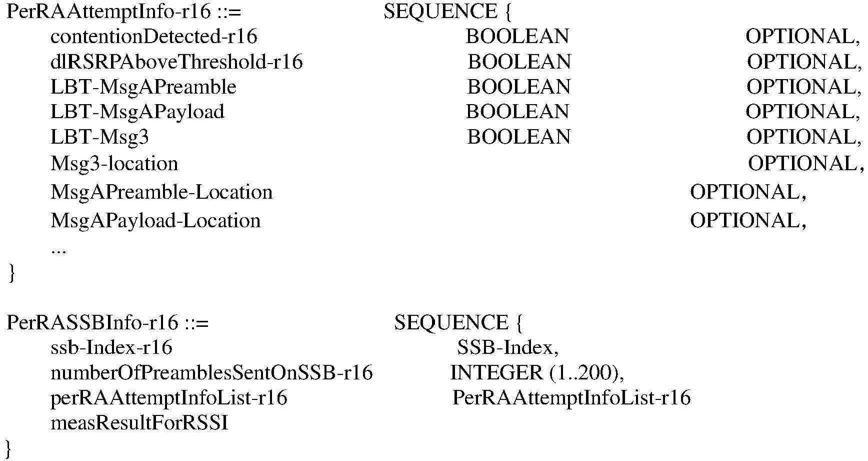

### 2. On the network side:

The network device may receive a situation of a random access that has been performed by a terminal device, where the situation of the random access includes information related to a result of an LBT detection of the terminal device in a random access attempt.

Optionally, the network device may further adjust the random access resource according to the situation of the random access, for example, change a time-frequency location of the random access resource when a plurality pieces of information related to LBT failure are received.

Optionally, the network device determines whether PerRAAttemptInfoList-r16 in the received random access report of the terminal contains too many PerRAAttemptInfo indicating information related to LBT failure. If the answer is yes, it is considered to change the time-frequency location of the random access resource. For example, the frequency location of a bandwidth part (BWP) where the random access is located is changed, specifically, locationAndBandwidth may be changed to avoid a frequency position with a lot of interference. Alternatively, when the BWP is wide enough (greater than 20MHz), a frequency position of the random access resource inside the BWP, msg1-FrequencyStart-r16, is changed.

To sum up, in the embodiments of the present application, the terminal device can report to the network device the situation of the random access that has been performed before, and the situation of the random access may include information related to a result of an LBT detection of the terminal device in a random access attempt, so that the network device can obtain the LBT situation during the random access procedure of the terminal device, and know whether its own random access resource (the time-frequency resource position of the preamble) is placed in a position that is often subject to external interference, so as to timely adjust the frequency location of the random access, thereby reducing the probability of LBT failure during the random access procedure.

The embodiments of the present application also provide a method for receiving and applying a situation of a random access, which may be applied to a network device. FIG. 6 is a flow chart of implementing a method 600 for receiving and applying a situation of a random access according to the embodiments of the present application, and the method includes the following steps.

In S610: a situation of a random access that has been performed by a terminal device is received from the terminal device, where the situation of the random access includes information related to a result of an LBT detection of the terminal device in a random access attempt.

Optionally, the network device may further adjust a random access resource according to the situation of the random access.

Optionally, the situation of the random access is received by the network device through a random access report.

Optionally, the adjusting random access resource according to the situation of the random access includes: changing a time-frequency location of the random access resource when a plurality pieces of information related to LBT failure are received.

Optionally, the changing the time-frequency location of the random access resource includes at least one of the following:
changing a frequency position of a BWP where the random access resource is located; and
changing a frequency position of the random access resource inside the BWP.

Optionally, in a case that a BWP width is greater than a preset threshold, the frequency position of the random access resource inside the BWP is changed.

Optionally, the adjusting the random access resource according to the situation of the random access includes: changing a frequency domain position of an uplink grant allocated to a message 3 in a random access response (RAR) when receiving a plurality pieces of information related to LBT failure of the message 3 of the random access procedure.

Optionally, the receiving a plurality pieces of information related to LBT failure includes: a plurality of each random access attempt information indicating information related to LBT failure being included in a list of each random access attempt information in the received random access report.

Optionally, the network device receives at least one of the following from the terminal device:
indication information indicating whether an LBT failure occurs before a message 1 of a random access procedure is sent;
indication information indicating whether an LBT failure occurs before a message 3 of the random access procedure is sent.

Optionally, the network device further receives at least one of the following from the terminal device:
an uplink grant of the message 3 of the random access procedure; and
a time-frequency location of the message 3 of the random access procedure.

Optionally, the network device receives at least one of the following from the terminal device:
indication information indicating whether an LBT failure occurs before a preamble of a message A of a random access procedure is sent;
indication information indicating whether an LBT failure occurs before a payload of the message A of the random access procedure is sent; and
indication information indicating whether an LBT failure occurs before a message 3 of the random access procedure is sent.

Optionally, the network device further receives at least one of the following from the terminal device:
information related to a time-frequency location where the preamble of the message A of the random access procedure is located;
information related to a time-frequency location where the payload of the message A of the random access procedure is located;
information related to a time-frequency location where the message 3 of the random access procedure is located; and
an uplink grant received on a fallback RAR.

Optionally, the information related to the time-frequency location where the preamble of the message A of the random access procedure is located includes at least one of the following:
a lowest frequency position used to transmit message A, msgA-RO-FrequencyStart; and
information about a number of frequency multiplexing, msgA-FDM.

Optionally, the method further includes: determining, by the network device, a spectrum bandwidth occupied by a sending resource of the preamble of the message A based on at least one of the lowest frequency position used to transmit message A msgA-RO-FrequencyStart, the information about the number of frequency multiplexing msgA-FDM, the number of PRBs occupied by each Random Access Channel Occasion (RO) unit, and a subcarrier bandwidth of the BWP.

The information related to the time-frequency location where the payload of the message A of the random access procedure is located provided by the embodiments of the present application includes at least one of the following:
a lowest frequency position where the payload is located, frequencyStartMsgA-PUSCH;
information about the number of frequency domain multiplexing, nrofMsgA-PO-FDM; and
the number of Physical Resource Blocks (PRBs) occupied by each physical uplink shared channel (PUSCH) unit, nrofPRBs-PerMsgA-PO.

Optionally, the method further includes: determining, by the network device, a spectrum bandwidth occupied by a sending resource of the payload of the message A based on at least one of the lowest frequency position where the payload is located frequencyStartMsgA-PUSCH, the information about the number of frequency domain multiplexing nrofMsgA-PO-FDM, the number of PRBs occupied by each PUSCH unit nrofPRBs-PerMsgA-PO, and a subcarrier bandwidth of the BWP.

Optionally, the network device receives a measurement result of the terminal device related to a channel occupancy of a cell where the random access is located from the terminal device.

Optionally, the measurement result of the terminal device related to the channel occupancy of the cell where the random access is located is included in a random access report; and/or
the measurement result of the terminal device related to the channel occupancy of the cell where the random access is located is included in a random access report under each SSB ; and/or
the measurement result of the terminal device related to the channel occupancy of the cell where the random access is located is included in a random access report under each CSI-RS; and/or
the measurement result of the terminal device related to the channel occupancy of the cell where the random access is located is included in a random access report of each random access attempt.

The embodiments of the present application further provide a terminal device, and FIG. 7 is a schematic structural diagram of a terminal device 700 according to the embodiments of the present application, where the terminal device includes:
a sending module 710, configured to send a situation of a random access that has been performed by the terminal device to a network device, where the situation of the random access includes information related to a result of an LBT detection of the terminal device in a random access attempt.

Optionally, the sending module 710 sends the situation of the random access in a random access report.

Optionally, the sending module 710 sends at least one of the following to the network device:
indication information indicating whether an LBT failure occurs before a message 1 of a random access procedure is sent; and
indication information indicating whether an LBT failure occurs before a message 3 of the random access procedure is sent.

Optionally, the sending module 710 further sends at least one of the following to the network device:
an uplink grant of the message 3 of the random access procedure; and
a time-frequency location of the message 3 of the random access procedure.

Optionally, the sending module 710 sends at least one of the following to the network device:
indication information indicating whether an LBT failure occurs before a preamble of a message A of a random access procedure is sent;
indication information indicating whether an LBT failure occurs before a payload of the message A of the random access procedure is sent; and
indication information indicating whether an LBT failure occurs before a message 3 of the random access procedure is sent.

Optionally, the sending module 710 further sends at least one of the following to the network device:
information related to a time-frequency location where the preamble of the message A of a random access procedure is located;
information related to a time-frequency location where the payload of the message A of a random access procedure is located;
information related to a time-frequency location where the message 3 of the random access procedure is located; and
an uplink grant received on the fallback random access response (RAR).

Optionally, the information related to the time-frequency location where the preamble of the message A of the random access procedure is located includes at least one of the following:
a lowest frequency position used to transmit message A, msgA-RO-FrequencyStart; and
the number of frequency multiplexing, msgA-FDM.

Optionally, the information related to the time-frequency location where the payload of the message A of the random access procedure is located includes at least one of the following:
a lowest frequency position where the payload is located, frequencyStartMsgA-PUSCH;
information about the number of frequency domain multiplexing, nrofMsgA-PO-FDM; and
the number of PRBs occupied by each physical uplink shared channel (PUSCH) unit, nrofPRBs-PerMsgA-PO.

Optionally, the sending module 710 sends a measurement result of the terminal device related to a channel occupancy of a cell where the random access is located to the network device.

Optionally, the measurement result of the terminal device related to the channel occupancy of the cell where the random access is located is included in a random access report; and/or
the measurement result of the terminal device related to the channel occupancy of the cell where the random access is located is included in a random access report under each synchronization signal block (SSB); and/or
the measurement result of the terminal device related to the channel occupancy of the cell where the random access is located is included in a random access report under each channel status indicator reference signal (CSI-RS); and/or
the measurement result of the terminal device related to the channel occupancy of the cell where the random access is located is included in a random access report of each random access attempt.

It should be understood that the above-mentioned and other operations and/or functions of the modules in the terminal device according to the embodiments of the present application are respectively intended to implement the corresponding processes of the terminal device in the method 200 of FIG. 2, and will not be repeated herein for the sake of brevity.

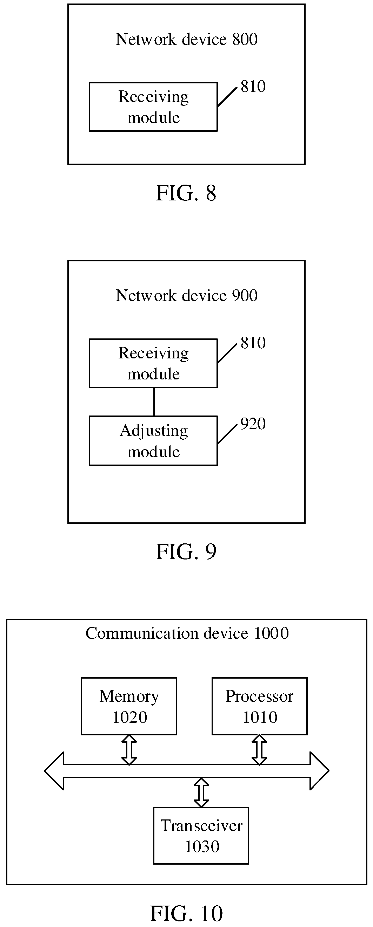

The embodiments of the present application further provides a network device, FIG. 8 is a schematic structural diagram of a network device 800 according to embodiments of the present application, and the network device 800 includes:
a receiving module 810, configured to receive a situation of a random access that has been performed by a terminal device from the terminal device, where the situation of the random access includes information related to a result of a listen before talk (LBT) detection of the terminal device in a random access attempt.

As shown in FIG. 9, optionally, the above mentioned network device may further includes:
an adjusting module 910, configured to adjust a random access resource according to the situation of the random access.

Optionally, the situation of the random access is received by the receiving module 810 through a random access report.

Optionally, the adjusting module 920 is configured to: change a time-frequency location of the random access resource when a plurality pieces of information related to LBT failure is received.

Optionally, the changing the time-frequency location of the random access resource includes at least one of the following:
changing a frequency position of a bandwidth part (BWP) where the random access resource is located; and
changing a frequency position of the random access resource inside the BWP.

Optionally, in a case that a BWP width is greater than a preset threshold, the frequency position of the random access resource inside the BWP is changed.

Optionally, the adjusting module 920 is configured to: change a frequency domain position of an uplink grant allocated to a message 3 in a random access response (RAR) when receiving a plurality pieces of information related to LBT failure of the message 3 of the random access procedure.

Optionally, the receiving a plurality pieces of information related to LBT failure includes:
a plurality of each random access attempt information indicating information related to LBT failure being included in a list of the each random access attempt information in the received random access report.

Optionally, the receiving module 810 receives at least one of the following from the terminal device:
indication information indicating whether an LBT failure occurs before a message 1 of a random access procedure is sent; and
indication information indicating whether an LBT failure occurs before a message 3 of the random access procedure is sent.

Optionally, the receiving module 810 further receives at least one of the following from the terminal device:
an uplink grant of the message 3 of the random access procedure; and
a time-frequency location of the message 3 of the random access procedure.

Optionally, the receiving module 810 further receives at least one of the following from the terminal device:
indication information indicating whether an LBT failure occurs before a preamble of a message A of a random access procedure is sent;
indication information indicating whether an LBT failure occurs before a payload of the message A of the random access procedure is sent; and
indication information indicating whether an LBT failure occurs before a message 3 of the random access procedure is sent.

Optionally, the receiving module 810 further receives at least one of the following from the terminal device:
information related to a time-frequency location where the preamble of the message A of the random access procedure is located;
information related to a time-frequency location where the payload of the message A of the random access procedure is located;
information related to a time-frequency location where the message 3 of the random access procedure is located; and
an uplink grant received on the fallback RAR.

Optionally, the information related to the time-frequency location where the preamble of the message A of the random access procedure is located includes at least one of the following:
a lowest frequency position used to transmit message A, msgA-RO-FrequencyStart; and
information about the number of frequency multiplexing, msgA-FDM.

Optionally, the adjusting module 920 is further configured to:
determine a spectrum bandwidth occupied by a sending resource of the preamble of the message A based on at least one of the lowest frequency position used to transmit message A msgA-RO-FrequencyStart, the information about the number of frequency multiplexing msgA-FDM, the number of PRBs occupied by each Random Access Channel Occasion (RO) unit, and a subcarrier bandwidth of the BWP.

Optionally, the information related to the time-frequency location where the payload of the message A of the random access procedure is located includes at least one of the following:
a lowest frequency position where the payload is located, frequencyStartMsgA-PUSCH;
information about the number of frequency domain multiplexing, nrofMsgA-PO-FDM;
the number of Physical Resource Blocks (PRBs) occupied by each physical uplink shared channel (PUSCH) unit, nrofPRBs-PerMsgA-PO.

Optionally, the adjusting module 920 is further configured to:
determine a spectrum bandwidth occupied by a sending resource of the load of the message A based on at least one of the lowest frequency position where the payload is located frequencyStartMsgA-PUSCH, the information about the number of frequency domain multiplexing nrofMsgA-PO-FDM, the number of PRBs occupied by each PUSCH unit nrofPRBs-PerMsgA-PO, and a subcarrier bandwidth of the BWP.

Optionally, the receiving module 810 receives a measurement result of the terminal device related to a channel occupancy of a cell where the random access is located from the terminal device.

Optionally, the measurement result of the terminal device related to the channel occupancy of the cell where the random access is located is included in a random access report; and/or
the measurement result of the terminal device related to the channel occupancy of the cell where the random access is located is included in a random access report under each SSB ; and/or
the measurement result of the terminal device related to the channel occupancy of the cell where the random access is located is included in a random access report under each CSI-RS; and/or
the measurement result of the terminal device related to the channel occupancy of the cell where the random access is located is included in a random access report of each random access attempt.

It should be understood that the above-mentioned and other operations and/or functions of the modules in the network device according to the embodiments of the present application are respectively intended to implement the corresponding processes of the network device in the method 600 of FIG. 6, and will not be repeated herein for the sake of brevity.

FIG. 10 is a schematic structural diagram of a communication device 1000 according to the embodiments of the present application. The communication device 1000 shown in FIG. 10 includes a processor 1010, and the processor 1010 may call and run a computer program from a memory, so as to implement the method in the embodiments of the present application.

Optionally, as shown in FIG. 10, the communication device 1000 may further include a memory 1020. The processor 1010 may call and run a computer program from the memory 1020, so as to implement the method in the embodiments of the present application.

The memory 1020 may be a separate device independent of the processor 1010, or it may be integrated into the processor 1010.

Optionally, as shown in FIG. 10, the communication device 1000 may further include a transceiver 1030, and the processor 1010 may control the transceiver 1030 to communicate with other device(s). Specifically, the transceiver 1030 may send information or data to other device(s), or receive information or data from other device(s).

The transceiver 1030 may include a transmitter and a receiver. The transceiver 1030 may further include an antenna, and there may be one or more antennas.

Optionally, the communication device 1000 may be the terminal device of the embodiments of the present application, and the communication device 1000 may implement the corresponding processes implemented by the terminal device in each method of the embodiments of the present application, which will not be repeated here for the sake of brevity.

Optionally, the communication device 1000 may be the network device of the embodiments of the present application, and the communication device 1000 may implement the corresponding processes implemented by the network device in each method of the embodiments of the present application, which will not be repeated here for the sake of brevity.

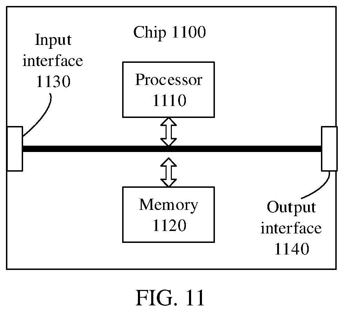

FIG. 11 is a schematic structural diagram of a chip 1100 according to the embodiments of the present application. The chip 1100 shown in FIG. 11 includes a processor 1110, and the processor 1110 may call and run a computer program from a memory, so as to implement the methods in the embodiments of the present application.

Optionally, as shown in FIG. 11, the chip 1100 may further include a memory 1120. The processor 1110 may invoke and run a computer program from the memory 1120, so as to implement the methods in the embodiments of the present application.

The memory 1120 may be a separate device independent of the processor 1110, or it may be integrated into the processor 1110.

Optionally, the chip 1100 may further include an input interface 1130 The processor 1110 may control the input interface 1130 to communicate with other devices or chips, specifically, to acquire information or data sent by other devices or chips.

Optionally, the chip 1100 may further include an output interface 1140 The processor 1110 may control the output interface 1140 to communicate with other devices or chips, specifically, to output information or data sent by other devices or chips.

Optionally, the chip may be applied to the terminal device in the embodiments of the present application, and the chip may implement the corresponding processes implemented by the terminal device in the methods of the embodiments of the present application. For the sake of brevity, details are not repeated here.

Optionally, the chip may be applied to the network device in the embodiments of the present application, and the chip may implement the corresponding processes implemented by the network device in the methods of the embodiments of the present application. For the sake of brevity, details are not repeated here.

It should be understood that the chip mentioned in the embodiments of the present application may also be referred to as a system on chip, a system chip, a chip system, or a System-on-Chip.

The processor mentioned above may be a general-purpose processor, a digital signal processor (DSP), a field programmable gate array (FPGA), an application specific integrated circuit (ASIC), or other programmable logic devices, transistor logic devices, discrete hardware components, etc. The general-purpose processor mentioned above may be a microprocessor or any conventional processor, etc.

The aforementioned memories may be volatile memories or nonvolatile memories, or may include both the volatile and nonvolatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above-mentioned memories are illustrative but not restrictive. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not be limited to, these and any other suitable types of memory.

All or part of the above embodiments may be implemented by software, hardware, firmware or any combination thereof. When being implemented using software, it may be implemented in whole or in part in the form of a computer program product. The computer program product includes one or more computer instructions. When the computer program instructions are loaded and executed on the computer, the processes or functions according to the embodiments of the present application are generated in whole or in part. The computer can be a general purpose computer, a special purpose computer, a computer network, or other programmable apparatus. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center via wired (e.g., coaxial cable, fiber optic, Digital Subscriber Line (DSL)) or wireless (e.g., infrared, wireless, microwave, etc.) means. The computer-readable storage medium may be any available medium that may be accessed by a computer, or a data storage device such as a server or a data center containing one or more available media integration. The available medium may be a magnetic medium (such as a floppy disk, a hard disk, or a magnetic tape), an optical medium (such as a DVD), or a semiconductor medium (such as a Solid State Disk (SSD)) and the like.

It should be understood that, in various embodiments of the present application, the sequence numbers of the above-mentioned processes do not imply the order of execution, and the execution order of the processes should be determined by their functions and internal logic, and shall not constitute any limitation to the processes implemented in the embodiments of the present application.

Those skilled in the art may clearly understand that for the convenience and brevity of the description, the specific working process of the above-described system, apparatus and unit may refer to the corresponding processes in the foregoing method embodiments, which will not be repeated here.

## Claims

1. A method for reporting a situation of a random access, applied to a terminal device, the method comprising:
sending (S610) a situation of a random access that has been performed by the terminal device to a network device, wherein the situation of the random access comprises information related to a result of a listen before talk, LBT, detection of the terminal device in a random access attempt,
wherein at least one of the following is sent by the terminal device to the network device:
indication information indicating whether an LBT failure is detected before a preamble of a random access message A is sent;
indication information indicating whether an LBT failure is detected before a payload of the random access message A is sent; and
indication information indicating whether an LBT failure is detected before a random access message 3 is sent,
wherein at least one of the following is further sent by the terminal device to the network device:
information related to a time-frequency location where the preamble of the random access message A is located;
information related to a time-frequency location where the payload of the random access message A is located;
information related to a time-frequency location where the random access message 3 is located.

2. The method according to claim 1, wherein the situation of the random access is sent by the terminal device in a random access report.

3. The method according to claim 1 or 2, wherein the information related to the time-frequency location where the preamble of the random access message A is located comprises at least one of the following:
a lowest frequency position used to transmit message A, msgA-RO-FrequencyStart; and
a number of frequency multiplexing, msgA-FDM,
wherein the information related to the time-frequency location where the payload of the message A of the random access procedure is located comprises at least one of the following:
a lowest frequency position where the payload is located, frequencyStartMsgA-PUSCH;
information about a number of frequency domain multiplexing, nrofMsgA-PO-FDM; and
a number of PRBs occupied by each physical uplink shared channel, PUSCH, unit, nrofPRBs-PerMsgA-PO.

4. The method according to any one of claims 1 to 3, wherein a measurement result of the terminal device related to a channel occupancy of a cell where the random access is located is sent by the terminal device to the network device,
wherein
the measurement result of the terminal device related to the channel occupancy of the cell where the random access is located is comprised in a random access report; and/or
the measurement result of the terminal device related to the channel occupancy of the cell where the random access is located is comprised in a random access report under each synchronization signal block, SSB ; and/or
the measurement result of the terminal device related to the channel occupancy of the cell where the random access is located is comprised in a random access report under each channel status indicator reference signal, CSI-RS; and/or
the measurement result of the terminal device related to the channel occupancy of the cell where the random access is located is comprised in a random access report of each random access attempt.

5. A method for receiving and applying a situation of a random access, applied to a network device, the method comprising:
receiving (S610) a situation of a random access that has been performed by a terminal device from the terminal device, wherein the situation of the random access comprises information related to a result of a listen before talk, LBT, detection of the terminal device in a random access attempt,
wherein at least one of the following is received by the network device from the terminal device:
indication information indicating whether an LBT failure occurs before a preamble of a message A of a random access procedure is sent;
indication information indicating whether an LBT failure occurs before a payload of the message A of the random access procedure is sent; and
indication information indicating whether an LBT failure occurs before a message 3 of the random access procedure is sent,
wherein at least one of the following is further received by the network device from the terminal device:
information related to a time-frequency location where the preamble of the message A of the random access procedure is located;
information related to a time-frequency location where the payload of the message A of the random access procedure is located;
information related to a time-frequency location where the message 3 of the random access procedure is located.

6. The method according to claim 5, further comprising:
adjusting a random access resource according to the situation of the random access.

7. The method according to claim 6, wherein the adjusting the random access resource according to the situation of the random access comprises:
changing a time-frequency location of the random access resource in response to that a plurality pieces of information related to LBT failure is received,
wherein the changing the time-frequency location of the random access resource comprises at least one of the following:
changing a frequency position of a bandwidth part, BWP, where the random access resource is located; and
changing a frequency position of the random access resource inside the BWP,
wherein in a case that a BWP width is greater than a preset threshold, the frequency position of the random access resource inside the BWP is changed.

8. The method according to claim 6, wherein the adjusting the random access resource according to the situation of the random access comprises:
changing a frequency domain position of an uplink grant allocated to a message 3 of the random access procedure in a random access response, RAR, in response to receiving a plurality pieces of information related to LBT failure of the message 3.

9. The method according to any one of claims 5 to 8, wherein the receiving a plurality pieces of information related to LBT failure comprises:
a plurality of each random access attempt information indicating information related to LBT failure being comprised in a list of the each random access attempt information in the received random access report.

10. The method according to claim 9, wherein the information related to the time-frequency location where the preamble of the message A of the random access procedure is located comprises at least one of the following:
a lowest frequency position used to transmit message A, msgA-RO-FrequencyStart; and
information about a number of frequency multiplexing, msgA-FDM,
further comprising:
determining, by the network device, a spectrum bandwidth occupied by a sending resource of the preamble of the message A based on at least one of the lowest frequency position used to transmit message A msgA-RO-FrequencyStart, the information about a number of frequency multiplexing msgA-FDM, a number of PRBs occupied by each random access channel occasion, RO, unit, and a subcarrier bandwidth of a BWP.

11. The method according to claim 9, wherein the information related to the time-frequency location where the payload of the message A of the random access procedure is located comprises at least one of the following:
a lowest frequency position where the payload is located, frequencyStartMsgA-PUSCH;
information about a number of frequency domain multiplexing, nrofMsgA-PO-FDM;
a number of Physical Resource Blocks, PRBs, occupied by each physical uplink shared channel, PUSCH, unit, nrofPRBs-PerMsgA-PO,
further comprising:
determining, by the network device, a spectrum bandwidth occupied by a sending resource of the payload of the message A based on at least one of the lowest frequency position where the payload is located frequencyStartMsgA-PUSCH, the information about a number of frequency domain multiplexing nrofMsgA-PO-FDM, the number of PRBs occupied by each PUSCH unit nrofPRBs-PerMsgA-PO, and a subcarrier bandwidth of a BWP.

12. A terminal device, comprising: a processor and a memory, wherein the memory is configured to store a computer program, and the processor is configured to call and run the computer program stored in the memory to perform the method according to any one of claims 1 to 4.

13. A network device, comprising: a processor and a memory, wherein the memory is configured to store a computer program, and the processor is configured to call and run the computer program stored in the memory to perform the method according to any one of claims 5 to 11.

## Patentansprüche

1. Verfahren zum Melden einer Situation eines Random Access, angewendet bei einer Endgerätevorrichtung, wobei das Verfahren umfasst:
Senden (S610) einer Situation eines Random Access, der durch die Endgerätevorrichtung durchgeführt wurde, an eine Netzwerkvorrichtung, wobei die Situation des Random Access Informationen bezüglich eines Ergebnisses einer Listen-before-Talk- bzw. LBT-Detektion der Endgerätevorrichtung in einem Random-Access-Versuch umfasst,
wobei mindestens eines des Folgenden durch die Endgerätevorrichtung an die Netzwerkvorrichtung gesendet wird:
Indikationsinformationen, die angeben, ob ein LBT-Fehlschlag detektiert wird, bevor eine Präambel einer Random-Access-Nachricht A gesendet wird;
Indikationsinformationen, die angeben, ob ein LBT-Fehlschlag detektiert wird, bevor Nutzdaten der Random-Access-Nachricht A gesendet werden; und
Indikationsinformationen, die angeben, ob ein LBT-Fehlschlag detektiert wird, bevor eine Random-Access-Nachricht 3 gesendet wird,
wobei mindestens eines des Folgenden ferner durch die Endgerätevorrichtung an die Netzwerkvorrichtung gesendet wird:
Informationen bezüglich eines Zeit-Frequenz-Ortes, an dem die Präambel der Random-Access-Nachricht A lokalisiert ist;
Informationen bezüglich eines Zeit-Frequenz-Ortes, an dem die Nutzdaten der Random-Access-Nachricht A lokalisiert sind;
Informationen bezüglich eines Zeit-Frequenz-Ortes, an dem die Random-Access-Nachricht 3 lokalisiert ist.

2. Verfahren nach Anspruch 1, wobei die Situation des Random Access durch die Endgerätevorrichtung in einem Random-Access-Bericht gesendet wird.

3. Verfahren nach Anspruch 1 oder 2, wobei die Informationen bezüglich des Zeit-Frequenz-Ortes, an dem die Präambel der Random-Access-Nachricht A lokalisiert ist, mindestens eines des Folgenden umfassen:
eine niedrigste Frequenzposition, die zum Übertragen von Nachricht A verwendet wird, msgA-RO-FrequencyStart; und
eine Anzahl des Frequenzmultiplexing, msgA-FDM,
wobei die Informationen bezüglich des Zeit-Frequenz-Ortes, an dem die Nutzdaten der Nachricht A der Random-Access-Prozedur lokalisiert sind, mindestens eines des Folgenden umfassen:
eine niedrigste Frequenzposition, an der die Nutzdaten lokalisiert sind, frequencyStartMsgA-PUSCH;
Informationen über eine Anzahl des Frequenzdomänenmultiplexing, nrofMsgA-PO-FDM; und
eine Anzahl von PRBs, die von jeder Einheit eines physischen gemeinsam genutzten Uplink-Kanals, PUSCH, belegt sind, nrofPRBs-PerMsgA-PO.

4. Verfahren nach einem der Ansprüche 1 bis 3, wobei ein Messergebnis der Endgerätevorrichtung bezüglich einer Kanalbelegung einer Zelle, an der der Random Access lokalisiert ist, durch die Endgerätevorrichtung an die Netzwerkvorrichtung gesendet wird,
wobei
das Messergebnis der Endgerätevorrichtung bezüglich der Kanalbelegung der Zelle, an der der Random Access lokalisiert ist, in einem Random-Access-Bericht enthalten ist; und/oder
das Messergebnis der Endgerätevorrichtung bezüglich der Kanalbelegung der Zelle, an der der Random Access lokalisiert ist, in einem Random-Access-Bericht unter jedem Synchronisationssignalblock, SSB, enthalten ist; und/oder
das Messergebnis der Endgerätevorrichtung bezüglich der Kanalbelegung der Zelle, an der der Random Access lokalisiert ist, in einem Random-Access-Bericht unter jedem Kanalstatusindikator-Referenzsignal, CSI-RS, enthalten ist; und/oder
das Messergebnis der Endgerätevorrichtung bezüglich der Kanalbelegung der Zelle, an der der Random Access lokalisiert ist, in einem Random-Access-Bericht jedes Random-Access-Versuchs enthalten ist.

5. Verfahren zum Empfangen und Anwenden einer Situation eines Random Access, angewendet bei einer Netzwerkvorrichtung, wobei das Verfahren umfasst:
Empfangen (S610) einer Situation eines Random Access, der durch eine Endgerätevorrichtung durchgeführt wurde, von der Endgerätevorrichtung, wobei die Situation des Random Access Informationen bezüglich eines Ergebnisses einer Listen-before-Talk- bzw. LBT-Detektion der Endgerätevorrichtung in einem Random-Access-Versuch umfasst,
wobei mindestens eines des Folgenden durch die Netzwerkvorrichtung von der Endgerätevorrichtung empfangen wird:
Indikationsinformationen, die angeben, ob ein LBT-Fehlschlag stattfindet, bevor eine Präambel einer Nachricht A einer Random-Access-Prozedur gesendet wird;
Indikationsinformationen, die angeben, ob ein LBT-Fehlschlag stattfindet, bevor Nutzdaten der Nachricht A der Random-Access-Prozedur gesendet werden; und
Indikationsinformationen, die angeben, ob ein LBT-Fehlschlag stattfindet, bevor eine Nachricht 3 der Random-Access-Prozedur gesendet wird,
wobei mindestens eines des Folgenden ferner durch die Netzwerkvorrichtung von der Endgerätevorrichtung empfangen wird:
Informationen bezüglich eines Zeit-Frequenz-Ortes, an dem die Präambel der Nachricht A der Random-Access-Prozedur lokalisiert ist;
Informationen bezüglich eines Zeit-Frequenz-Ortes, an dem die Nutzdaten der Nachricht A der Random-Access-Prozedur lokalisiert sind;
Informationen bezüglich eines Zeit-Frequenz-Ortes, an dem die Nachricht 3 der Random-Access-Prozedur lokalisiert ist.

6. Verfahren nach Anspruch 5, ferner umfassend:
Anpassen einer Random-Access-Ressource gemäß der Situation des Random Access.

7. Verfahren nach Anspruch 6, wobei das Anpassen der Random-Access-Ressource gemäß der Situation des Random Access umfasst:
Ändern eines Zeit-Frequenz-Ortes der Random-Access-Ressource als Reaktion darauf, dass eine Vielzahl von Stücken von Informationen bezüglich des LBT-Fehlschlags empfangen wird,
wobei das Ändern des Zeit-Frequenz-Ortes der Random-Access-Ressource mindestens eines des Folgenden umfasst:
Ändern einer Frequenzposition eines Bandbreitenteils, BWP, an dem die Random-Access-Ressource lokalisiert ist; und
Ändern einer Frequenzposition der Random-Access-Ressource innerhalb des BWP,
wobei in einem Fall, dass eine BWP-Breite größer als eine voreingestellte Schwelle ist, die Frequenzposition der Random-Access-Ressource innerhalb des BWP geändert wird.

8. Verfahren nach Anspruch 6, wobei das Anpassen der Random-Access-Ressource gemäß der Situation des Random Access umfasst:
Ändern einer Frequenzdomänenposition einer Uplink-Gewährung, die einer Nachricht 3 der Random-Access-Prozedur zugewiesen ist, in einer Random-Access-Antwort, RAR, als Reaktion auf das Empfangen einer Vielzahl von Stücken von Informationen bezüglich des LBT-Fehlschlags der Nachricht 3.

9. Verfahren nach einem der Ansprüche 5 bis 8, wobei das Empfangen einer Vielzahl von Stücken von Informationen bezüglich des LBT-Fehlschlags umfasst:
eine Vielzahl von Informationen jedes Random-Access-Versuchs, die Informationen bezüglich des LBT-Fehlschlags angeben, die in einer Liste der Informationen jedes Random-Access-Versuchs im empfangenen Random-Access-Bericht enthalten sind.

10. Verfahren nach Anspruch 9, wobei die Informationen bezüglich des Zeit-Frequenz-Ortes, an dem die Präambel der Nachricht A der Random-Access-Prozedur lokalisiert ist, mindestens eines des Folgenden umfassen:
eine niedrigste Frequenzposition, die zum Übertragen der Nachricht A verwendet wird, msgA-RO-FrequencyStart; und
Informationen über eine Anzahl des Frequenzmultiplexing, msgA-FDM,
ferner umfassend:
Bestimmen, durch die Netzwerkvorrichtung, einer Spektrumsbandbreite, die von einer sendenden Ressource belegt wird, der Präambel der Nachricht A, basierend auf mindestens einem der niedrigsten Frequenzposition, die zum Übertragen der Nachricht A verwendet wird, msgA-RO-FrequencyStart, der Informationen über eine Anzahl des Frequenzmultiplexing, msgA-FDM, einer Anzahl von PRBs, die von jeder Einheit einer Random-Access-Kanal-Occasion, RO-Einheit, belegt sind, und einer Unterträgerbandbreite eines BWP.

11. Verfahren nach Anspruch 9, wobei die Informationen bezüglich des Zeit-Frequenz-Ortes, an dem die Nutzdaten der Nachricht A der Random-Access-Prozedur lokalisiert sind, mindestens eines des Folgenden umfassen:
eine niedrigste Frequenzposition, an der die Nutzdaten lokalisiert sind, frequencyStartMsgA-PUSCH;
Informationen über eine Anzahl des Frequenzdomänenmultiplexing, nrofMsgA-PO-FDM;
eine Anzahl von physischen Ressourcenblöcken, PRBs, die von jeder Einheit eines physischen gemeinsam genutzten Uplink-Kanals, PUSCH, belegt sind, nrofPRBs-PerMsgA-PO,
ferner umfassend:
Bestimmen, durch die Netzwerkvorrichtung, einer Spektrumsbandbreite, die von einer sendenden Ressource belegt ist, der Nutzdaten der Nachricht A, basierend auf mindestens einem der niedrigsten Frequenzposition, an der die Nutzdaten lokalisiert sind, frequencyStartMsgA-PUSCH, der Informationen über eine Anzahl des Frequenzdomänenmultiplexing, nrofMsgA-PO-FDM, der Anzahl von PRBs, die von jeder PUSCH-Einheit belegt sind, nrofPRBs-PerMsgA-PO, und einer Unterträgerbandbreite eines BWP.

12. Endgerätevorrichtung, umfassend: einen Prozessor und einen Speicher, wobei der Speicher dazu ausgelegt ist, ein Computerprogramm zu speichern, und der Prozessor dazu ausgelegt ist, das im Speicher gespeicherte Computerprogramm aufzurufen und auszuführen, um das Verfahren nach einem der Ansprüche 1 bis 4 durchzuführen.

13. Netzwerkvorrichtung, umfassend: einen Prozessor und einen Speicher, wobei der Speicher dazu ausgelegt ist, ein Computerprogramm zu speichern, und der Prozessor dazu ausgelegt ist, das im Speicher gespeicherte Computerprogramm aufzurufen und auszuführen, um das Verfahren nach einem der Ansprüche 5 bis 11 durchzuführen.

## Revendications

1. Procédé de signalisation d'une situation d'accès aléatoire, appliqué à un dispositif terminal, le procédé comprenant les étapes suivantes :
envoyer (S610) une situation d'accès aléatoire qui a été effectuée par le dispositif terminal à un dispositif de réseau, où la situation de l'accès aléatoire comprend des informations relatives à un résultat d'une détection d'écoute avant de parler, LBT, du dispositif terminal dans une tentative d'accès aléatoire,
dans lequel au moins l'un des éléments suivants est envoyé par le dispositif terminal au dispositif réseau :
des informations d'indication indiquant si un échec de LBT est détecté avant qu'un préambule d'un message d'accès aléatoire A ne soit envoyé ;
des informations d'indication indiquant si un échec de LBT est détecté avant qu'une charge utile du message d'accès aléatoire A ne soit envoyée ; et
des informations d'indication indiquant si un échec de LBT est détecté avant qu'un message d'accès aléatoire 3 ne soit envoyé,
dans lequel au moins l'un des éléments suivants est en outre envoyé par le dispositif terminal au dispositif réseau :
des informations relatives à un emplacement temps-fréquence où se trouve le préambule du message d'accès aléatoire A ;
des informations relatives à un emplacement temps-fréquence où se trouve la charge utile du message d'accès aléatoire A ;
des informations relatives à un emplacement temps-fréquence où se trouve le message d'accès aléatoire 3.

2. Procédé selon la revendication 1, dans lequel la situation de l'accès aléatoire est envoyée par le dispositif terminal dans un rapport d'accès aléatoire.

3. Procédé selon la revendication 1 ou la revendication 2, dans lequel les informations relatives à l'emplacement temps-fréquence où se trouve le préambule du message d'accès aléatoire A comprennent au moins l'un des éléments suivants :
la position de fréquence la plus basse utilisée pour transmettre le message A, msgA-RO-FrequencyStart ; et
un nombre de multiplexages de fréquences, msgA-FDM,
dans lequel les informations relatives à l'emplacement temps-fréquence où se trouve la charge utile du message A de la procédure d'accès aléatoire comprennent au moins l'un des éléments suivants :
la position de fréquence la plus basse où se situe la charge utile, frequencyStartMsgA-PUSCH ;
des informations sur un nombre de multiplexages dans le domaine fréquentiel, nrofMsgA-PO-FDM ; et
un nombre de PRB occupés par chaque unité de canal partagé physique de liaison montante, PUSCH, nrofPRBs-PerMsgA-PO.

4. Procédé selon l'une quelconque des revendications 1 à 3, dans lequel un résultat de mesure du dispositif terminal relatif à une occupation de canal d'une cellule où se trouve l'accès aléatoire est envoyé par le dispositif terminal au dispositif réseau,
où
le résultat de mesure du dispositif terminal relatif à l'occupation de canal de la cellule où se trouve l'accès aléatoire est compris dans un rapport d'accès aléatoire ; et/ou
le résultat de mesure du dispositif terminal relatif à l'occupation de canal de la cellule où se trouve l'accès aléatoire est compris dans un rapport d'accès aléatoire sous chaque bloc de signal de synchronisation, SSB ; et/ou
le résultat de mesure du dispositif terminal relatif à l'occupation de canal de la cellule où se trouve l'accès aléatoire est compris dans un rapport d'accès aléatoire sous chaque signal de référence d'indicateur d'état de canal, CSI-RS ; et/ou
le résultat de mesure du dispositif terminal relatif à l'occupation de canal de la cellule où se trouve l'accès aléatoire est compris dans un rapport d'accès aléatoire de chaque tentative d'accès aléatoire.

5. Procédé pour recevoir et appliquer une situation d'accès aléatoire, appliqué à un dispositif de réseau, le procédé comprenant les étapes suivantes :
recevoir (S610) une situation d'accès aléatoire qui a été effectué par un dispositif terminal à partir du dispositif terminal, où la situation de l'accès aléatoire comprend des informations relatives à un résultat d'une détection d'écoute avant de parler, LBT, du dispositif terminal dans une tentative d'accès aléatoire,
dans lequel au moins l'un des éléments suivants est reçu par le dispositif réseau à partir du dispositif terminal :
des informations d'indication indiquant si un échec de LBT se produit avant l'envoi d'un préambule d'un message A d'une procédure d'accès aléatoire ;
des informations d'indication indiquant si un échec de LBT se produit avant l'envoi d'une charge utile du message A de la procédure d'accès aléatoire ; et
des informations d'indication indiquant si un échec de LBT se produit avant l'envoi d'un message 3 de la procédure d'accès aléatoire,
dans lequel au moins l'un des éléments suivants est en outre reçu par le dispositif de réseau à partir du dispositif terminal :
des informations relatives à un emplacement temps-fréquence où se trouve le préambule du message A de la procédure d'accès aléatoire ;
des informations relatives à un emplacement temps-fréquence où se trouve la charge utile du message A de la procédure d'accès aléatoire ;
des informations relatives à un emplacement temps-fréquence où se trouve le message 3 de la procédure d'accès aléatoire.

6. Procédé selon la revendication 5, comprenant en outre l'étape suivante :
ajuster une ressource d'accès aléatoire en fonction de la situation de l'accès aléatoire.

7. Procédé selon la revendication 6, dans lequel l'ajustement de la ressource d'accès aléatoire en fonction de la situation de l'accès aléatoire comprend :
la modification d'un emplacement temps-fréquence de la ressource d'accès aléatoire en réponse à la réception d'une pluralité d'informations relatives à un échec de LBT,
dans lequel la modification de l'emplacement temps-fréquence de la ressource d'accès aléatoire comprend au moins l'une des étapes suivantes :
modifier une position de fréquence d'une partie de bande passante, BWP, où la ressource d'accès aléatoire est située ; et
modifier une position de fréquence de la ressource d'accès aléatoire à l'intérieur de la BWP,
où, dans le cas où une largeur de BWP est supérieure à un seuil prédéfini, la position de fréquence de la ressource d'accès aléatoire à l'intérieur de la BWP est modifiée.

8. Procédé selon la revendication 6, dans lequel l'ajustement de la ressource d'accès aléatoire en fonction de la situation de l'accès aléatoire comprend :
la modification d'une position dans le domaine fréquentiel d'un octroi de liaison montante alloué à un message 3 de la procédure d'accès aléatoire dans une réponse d'accès aléatoire, RAR, en réponse à la réception d'une pluralité d'éléments d'informations relatifs à l'échec de LBT du message 3.

9. Procédé selon l'une quelconque des revendications 5 à 8, dans lequel la réception d'une pluralité d'éléments d'informations relatifs à l'échec de LBT comprend :
une pluralité d'informations de chaque tentative d'accès aléatoire indiquant que des informations relatives à l'échec de LBT sont contenues dans une liste des informations de chaque tentative d'accès aléatoire dans le rapport d'accès aléatoire reçu.

10. Procédé selon la revendication 9, dans lequel les informations relatives à l'emplacement temps-fréquence où se trouve le préambule du message A de la procédure d'accès aléatoire comprennent au moins l'un des éléments suivants :
la position de fréquence la plus basse utilisée pour transmettre le message A, msgA-RO-FrequencyStart ; et
des informations sur un nombre de multiplexages de fréquences, msgA-FDM,
le procédé comprenant en outre l'étape suivante :
déterminer, par le dispositif de réseau, une largeur de bande spectrale occupée par une ressource d'émission du préambule du message A sur la base d'au moins l'une de la position de fréquence la plus basse utilisée pour transmettre le message A msgA-RO-FrequencyStart, des informations sur un nombre de multiplexages de fréquences msgA-FDM, d'un nombre de PRB occupés par chaque unité d'occasion de canal d'accès aléatoire, RO, et d'une largeur de bande de sous-porteuse d'une BWP.

11. Procédé selon la revendication 9, dans lequel les informations relatives à l'emplacement temps-fréquence où se trouve la charge utile du message A de la procédure d'accès aléatoire comprennent au moins l'un des éléments suivants :
la position de fréquence la plus basse où se trouve la charge utile, frequencyStartMsgA-PUSCH ;
des informations sur un nombre de multiplexages dans le domaine fréquentiel, nrofMsgA-PO-FDM ;
un nombre de blocs de ressources physiques, PRB, occupés par chaque unité de canal partagé de liaison montante physique, PUSCH, nrofPRBs-PerMsgA-PO,
le procédé comprenant en outre l'étape suivante :
déterminer, par le dispositif de réseau, une largeur de bande spectrale occupée par une ressource d'émission de la charge utile du message A sur la base d'au moins l'une de la position de fréquence la plus basse où se trouve la charge utile frequencyStartMsgA-PUSCH, des informations sur un nombre de multiplexages dans le domaine fréquentiel nrofMsgA-PO-FDM, du nombre de PRB occupés par chaque unité PUSCH nrofPRBs-PerMsgA-PO, et d'une largeur de bande de sous-porteuse d'une BWP.

12. Dispositif terminal, comprenant : un processeur et une mémoire, où la mémoire est configurée pour stocker un programme informatique, et le processeur est configuré pour appeler et exécuter le programme informatique stocké dans la mémoire afin d'exécuter le procédé selon l'une quelconque des revendications 1 à 4.

13. Dispositif de réseau, comprenant : un processeur et une mémoire, où la mémoire est configurée pour stocker un programme informatique, et le processeur est configuré pour appeler et exécuter le programme informatique stocké dans la mémoire afin d'exécuter le procédé selon l'une quelconque des revendications 5 à 11.
